(19) Europäisches Patentamt
European Patent Office
Office européen des brevets

(11) **EP 3 045 600 A1**

(12) **EUROPÄISCHE PATENTANMELDUNG**

(43) Veröffentlichungstag:
**20.07.2016 Patentblatt 2016/29**

(51) Int Cl.:
***E04B 1/76*** *(2006.01)*

(21) Anmeldenummer: **15151456.9**

(22) Anmeldetag: **16.01.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Evonik Degussa GmbH**
**45128 Essen (DE)**

(72) Erfinder:
• **Geisler, Matthias**
**63538 Großkrotzenburg (DE)**
• **Gärtner, Gabriele**
**63454 Hanau (DE)**

(54) **Kapillaraktive Elemente umfassender Wärmedämmformkörper**

(57) Wärmedämmformkörper, der einen Lochungen aufweisenden, wärmedämmenden Kern umfasst und diese Lochungen mit einem kapillaraktiven Material befüllt sind, wobei der wärmedämmende Kern nicht kapillaraktiv ist und das kapillaraktive Material in den Lochungen kapillaraktive Dochte (A) umfasst.

**Figur 1**

EP 3 045 600 A1

**Beschreibung**

Die Erfindung betrifft einen Wärmedämmformkörper, der eine Wärmedämmplatte umfasst, die mit einem kapillaraktivem Material befüllte Lochungen aufweist.

Eine Innendämmung soll durch kapillaraktive, wasserdampfdiffusionsoffene Bereiche zum einen eine Aufnahme von Raumluftfeuchtigkeit in die Wand zulassen, zum anderen eine Rückführung von flüssigem Wasser, Kondensat, durch Kapillarität und Verdunstung in den Raum gewährleisten.

Aus der Fachwerkbauweise ist beispielsweise bekannt Feuchtigkeit zwischen Außenwand und Innenwand abzuleiten. In DE 202005005231 wird eine Herstellung von Fachwerkbauten offenbart, bei der Ziegelbausteine zwischen den für eine Fachwerkaußenwand typischen Holzriegeln angeordnet sind. Auf der Innenraumseite ist ein Putz aus Stroh und Lehm vorgesehen, dem kapillarleitfähige Dämmplatten vorgesetzt sind. Dämmplatten und Lehmschicht werden durch ein kapillarleitfähiges Element verbunden. Nachteilig hierbei ist die hohe Wärmeleitfähigkeit der kapillarleitfähigen Dämmplatten.

In WO2009/026910 wird eine Innendämmung beansprucht, die eine innenseitige Dämmschicht mit kapillarleitfähigen Bereichen aufweist, die durchgehend von einer Seite der Dämmschicht zur anderen Seite der Dämmschicht verlaufen. Als Dämmschicht kommt beispielsweise eine Polyurethanschaumplatte in Frage, die mit einem mineralischen Mörtel gefüllten Lochungen versehen ist. Nachteilig dabei ist, dass die bedingt durch die gefüllten Lochungen die Elastizität der Platte verloren geht und bei einem Biegen geschädigt wird gegebenenfalls die Füllung sogar vollständig herausfällt. Auch bei Zuschnitten vor Ort muss der kapillaraktive Anteil eventuell verworfen werden, wodurch Feuchtigkeitsnester im Mauerwerk entstehen können.

In WO2014/044709 wird ein Wandaufbau für ein Innendämmungssystem mit Wärmedämmplatten offenbart, wobei die Platten beispielsweise als Hauptbestandteil hydrophobierte Kieselsäure enthalten und mit definierter Fugenbreite wandseitig vor Ort auf eine bereits bestehende oder neu angebrachte kapillaraktive Schicht fixiert sind. Dabei sind die Fugen mit einer kapillaraktiven Schicht ausgefüllt, als auch die der Rauminnenseite zugewandte Seite der Wärmedämmplatten mit einer kapillaraktiven Schicht abgedeckt sind und damit allseitig von diesen kapillaraktiven Schichten umgeben sind. Die Fugen werden mit Hilfe von kapillaraktiven, vorzugsweise wärmedämmenden Fugenmassen, Mörteln oder Putzen spaltenfrei aufgefüllt. Zur Raumseite hin werden die Wärmedämmplatten ebenfalls mit einer kapillaraktiven, vorzugsweise wärmedämmenden Schicht abgedeckt, so dass die Wärmedämmplatten allseitig von den oben beschriebenen Schichten umgeben sind. Die Kapillarität wird dabei durch die Wahl der Fugenbreite, in Kombination mit dem Fugenmörtel bestimmt. Es hat sich gezeigt, dass für einen ausreichenden Rücktransport von Wasser die kapillaraktiven Fugen relativ breit sein müssen. Da das Fugenmaterial eine höhere Wärmeleitfähigkeit als die Wärmedämmplatte aufweist, wird die Wärmeleitfähigkeit des Verbundes insgesamt erhöht.

Es bestand daher die Aufgabe eine Isolation, die sowohl für die Innendämmung als auch in Gebieten mit hoher Luftfeuchtigkeit und hoher Temperatur, beispielsweise in der tropischen Klimazone, für die Aussendämmung bereitzustellen, die eine hohe Wärmedämmung bei gleichzeitig hoher mechanischer Festigkeit bereitzustellen.

Die Aufgabe wird gelöst, indem ein hydrophober Werkstoff kapillaraktiv ausgestattet wird.

Gegenstand der Erfindung ist ein Wärmedämmformkörper, der einen Lochungen aufweisenden wärmedämmenden Kern umfasst und bei dem diese Lochungen mit einem kapillaraktiven Material befüllt sind, *wobei* der wärmedämmende Kern nicht kapillaraktiv ist und das kapillaraktive Material in den Lochungen kapillaraktive Dochte umfasst oder aus ihnen besteht.

Bei dem erfindungsgemäßen Wärmedämmformkörper oder dem wärmedämmenden Kern soll es sich nicht um eine Vakuumisolation handeln. Der erfindungsgemäße Wärmedämmformkörper erfüllt bevorzugterweise die Anforderungen der Baustoffklasse A1 und A2 nach DIN EN ISO 13501-1.

Unter kapillaraktiven Dochten soll verstanden werden, dass die einzelnen Elemente der Dochte einen Durchmesser von 4 bis 100 $\mu$m, bevorzugt 10 bis 50 $\mu$m aufweisen. Das Material der einzelnen Elemente ist so zu wählen, dass der Durchmesser gemäß der Gleichung für die kapillare Steighöhe h

$$h = (2\sigma \cos \theta) / (\rho g r),$$

mit $\sigma$ = Oberflächenspannung, $\theta$ = Kontaktwinkel, $\rho$ = Dichte der Flüssigkeit,
g = Schwerebeschleunigung und r = Radius,
zu einer theoretischen Steighöhe der Flüssigkeitssäule von ca. 3 m bis 14 cm führt.

Der nicht kapillaraktive wärmedämmende Kern weist einen Wasseraufnahmekoeffizienten von weniger als 0,5 kg/m$^2$h$^{0,5}$ auf. Der Wasseraufnahmekoeffizient wird bestimmt nach EN ISO 15148.

Die Lochungen sind bevorzugt klein zu halten, um die Wärmeleitfähigkeit des wärmedämmenden Kernes nicht signifikant zu erhöhen. In der Regel beträgt der Durchmesser der Lochungen 100 bis 6000 $\mu$m, besonders bevorzugt 500 bis 3000 $\mu$m.

Die kapillaraktiven Dochte weisen eine Flächendichte von bevorzugt 10 bis 10000 Stück/m$^2$, besonders bevorzugt 25 bis 2000 Stück/m$^2$ auf. Die Querschnittsfläche eines kapillaraktiven Dochtes beträgt bevorzugt 0,001 bis 1 mm$^2$, besonders bevorzugt 0,005 bis 0,4 mm²; Die kapillaraktiven Dochte sollen eine möglichst hohe Zugfestigkeit aufweisen. Dies kann über die Anzahl, den Durchmessern oder der Flächendichte variiert werden.

Die kapillaraktiven Dochte müssen die Lochung nicht vollflächig umfassen. Bei den kapillaraktiven Dochten handelt es sich nicht um flächig die Lochung ausfüllenden Mörtel, wie dies im Stand der Technik bekannt ist.

Die kapillaraktiven Dochte können Garne, Zwirne, Fäden, texturierte Spinnfaden, Filamente und Kordeln sein. Als Garn ist ein dünnes Gebilde aus einer oder mehreren Fasern zu verstehen. Fasern sehr großer, praktisch unbegrenzter Länge heißen Filamente. Ein Zwirn ist ein linienförmiges Gebilde, das aus mehreren zusammengedrehten Garnen besteht. Ein Zwirn hat eine wesentlich höhere Reißfestigkeit als die nicht verzwirnten Einfach-Garne zusammen. Ein Faden ist ein Gebilde aus mehreren miteinander verbundenen oder verdrehten Fasern. Er ist lang, dünn und biegsam. Er kann gewebt, gestrickt, gewirkt, getuftet oder anders weiterverarbeitet werden. Bei einem dicken Faden geht der Begriff in den der Kordel über. Bevorzugt handelt es sich bei den kapillaraktiven Dochte der Erfindung um Fäden.

Das Material der kapillaraktiven Dochte kann aus einem anorganischen oder organischen Material bestehen. Bevorzugt sind alle anorganische Typen, die eine hydrophile Schlichte oder keine Schlichte aufweisen. Aber auch organische, kapillaraktive Dochte können verwendet werden. Dies limitiert die spätere maximale Einsatztemperatur bevor eine strukturelle Degradation einsetzt. Zusätzlich wird der brennbare Anteil des Wärmedämmformkörpers erhöht. Erfindungsgemäße Wärmedämmformkörper, die kapillaraktive Dochte aus einem organischen Material enthalten, sollten die Anforderungen der Baustoffklasse A1 und A2 (nach DIN EN ISO 13501-1) erfüllen.

Besonders bevorzugt wird das Material ausgewählt aus der Gruppe bestehend aus Basalt, Silika, E-Glas, C-Glas und Glas.

Zur Erhöhung der Formbarkeit und der Zugfestigkeit ist es auch möglich, dass die kapillaraktiven Dochte als Gemisch aus Glasfasern und Einzelfilamenten eines Thermoplasten oder aus Glasfasern und Metalllitzen vorliegen. Besonders bevorzugt sind anorganische, kapillaraktive Dochte, die der Materialklasse "nicht-brennbar" nach DIN EN ISO 13501-1 zuzuordnen sind.

Die kapillaraktiven Dochte können aus dem Wärmedämmformkörper herausragen, gegebenen falls zusätzlich aufgefächert sein oder bündig mit der Oberfläche des Wärmedämmformkörpers enden.

Bei dem wärmedämmenden Kern kann es sich um eine Wärmedämmplatte, eine Wärmedämmmatte oder eine Wärmedämmschüttung handeln. Eine Wärmedämmplatte ist als relativ flacher, weitgehend und ebener und fester Gegenstand definiert, der annähernd überall eine gleiche Dicke hat. Demgegenüber ist eine Wärmedämmmatte weniger fest und flexibel. Die Wärmedämmschüttung ist bei Bewegung nicht formstabil. Besonders bevorzugt ist eine Wärmedämmplatte.

Die Dicke des wärmedämmenden, nicht kapillaraktiven Kerns beträgt in der Regel 3 mm bis 150 mm. Bevorzugt ist ein Bereich von 10 bis 50 mm für eine Wärmedämmplatte oder eine Wärmedämmmatte und ein Bereich von 5 bis 50 mm für eine Wärmedämmschüttung.

Der nicht kapillaraktive, wärmedämmende Kern ist hydrophob. Er weist bevorzugt eine Wärmeleitfähigkeit von weniger als 0,025 W/(mK), besonders bevorzugt 0,010 bis 0,020 W/(mK), auf. Die Bestimmung der Wärmeleitfähigkeit erfolgt nach DIN EN 12667.

Der Kern ist ferner bevorzugt dampfdiffusionshemmend oder dampfdiffusionsoffen. Nach DIN 4108-3 ist diffusionsoffen definiert als $s_D \leq 0,5$ m, diffusionshemmend als $0,5 m < s_D < 1500$ m. Der $s_D$-Wert ist das Produkt aus der Dicke der Schicht und der Wasserdampfdiffusionswiderstandszahl.

Als Bestandteile des nicht kapillaraktiven, wärmedämmenden Kernes kommen hydrophobe Kieselsäure, hydrophobe Aerogele, organischer und anorganischer Natur, Polyurethane und Polystyrol in Frage.

Bevorzugter Bestandteil des nicht kapillaraktiven, wärmedämmenden Kernes ist hydrophobe Kieselsäure. Besonders vorteilhaft ist hierbei pyrogen hergestellte, hydrophobe Kieselsäure. In der Regel ist diese Kieselsäure Bestandteil einer Wärmedämm-Mischung, welche weiterhin noch IR-Trübungsmittel wie beispielsweise Titanoxide, Zirkonoxide, Ilmenit, Eisentitanat, Eisenoxide, Zirkonsilikat, Siliciumcarbid, Manganoxid und Ruß gegebenenfalls Fasern enthalten kann.

Die hydrophile, pyrogen hergestellte Kieselsäure wird in der Regel durch Flammenhydrolyse erhalten und anschließend hydrophobiert. Bei der Flammenhydrolyse wird ein verdampftes oder gasförmiges, hydrolysierbares Siliciumhalogenid mit einer Flamme zur Reaktion bringt, die durch Verbrennung von Wasserstoff und eines sauerstoffhaltigen Gases gebildet worden ist. Die Verbrennungsflamme stellt dabei Wasser für die Hydrolyse des Siliciumhalogenides und genügend Wärme zur Hydrolysereaktion zur Verfügung. Ein so hergestelltes Siliciumdioxid wird als pyrogene Kieselsäure bezeichnet. Sie liegt in Form von Aggregaten vor, die aufgrund ihrer dreidimensionalen, offenen Struktur mikoporös und makroporös sind. Aufgrund dieser Struktur sind pyrogen hergestellte Siliciumdioxidpulver ideale Wärmedämmstoffe, da die Aggregatstruktur eine hinreichende mechanische Stabilität bewirkt, die Wärmeübertragung durch Festkörperleitfähigkeit über die sehr kleinen Kontaktstellen innerhalb eines Aggregates minimiert und eine ausreichend hohe Porosität erzeugt.

Die besten Ergebnisse hinsichtlich der Wärmedämmung werden erhalten, wenn der wärmedämmende Kern hydrohobierte, pyrogene Kieselsäure umfasst.

Stellt der wärmedämmende, nicht kapillaraktive Kern eine Wärmedämmplatte dar, die hydrophobe, pyrogen hergestellte Kieselsäure enthält, dann ist es wie in WO 2013/013714 beschrieben, vorteilhaft zunächst eine hydrophile Platte herzustellen und diese erst nachfolgend bei Unterdruck oder Überdruck zu hydrophobieren. Zur Hydrophobierung werden bevorzugt Organosilane eingesetzt, die mit den Silanolgruppen der hydrophilen Bestandteilen der Wärmedämm-Mischung reagieren. Als Organosilane kommen $R_n$-Si-$X_{4-n}$, $R_3$Si-Y-Si$R_3$, $R_nSi_nO_n$, $(CH_3)_3$-Si-(O-Si$(CH_3)_2)_n$-OH, HO-Si$(CH_3)_2$-(O-Si$(CH_3)_2)_n$-OH, mit n = 1-8; R = -H, -CH$_3$, -C$_2$H$_5$; X =-Cl, -Br; -OCH$_3$, -OC$_2$H$_5$, -OC$_3$H$_8$, Y= NH, O in Betracht. Explizit seien $(CH_3)_3$SiCl, $(CH_3)_2$SiCl$_2$, CH$_3$SiCl$_3$, $(CH_3)_3$SiOC$_2$H$_5$, $(CH_3)_2$Si(OC$_2$H$_5)_2$, CH$_3$Si(OC$_2$H$_5)_3$, $(CH_3)_3$SiNHSi$(CH_3)_3$, $(CH_3)_3$SiOSi$(CH_3)_3$, $(CH_3)_8$Si$_4$O$_4$ [Octamethyltetracyclosiloxan], $(CH_3)_6$Si$_3$O$_3$ [Hexamethyltricyclosiloxan] und $(CH_3)_3$Si(OSi$(CH_3)_2)_4$OH [niedrigmolekulares Polysiloxanol] genannt.

Eine besondere Ausführungsform der Erfindung sieht vor, dass der Wärmedämmformkörper wenigstens eine, ein- oder beidseitig, des wärmedämmenden, nicht kapillaraktiven Kerns angebrachte kapillaraktive Deckschicht umfasst, wobei die kapillaraktiven Dochte in der kapillaraktiven Deckschicht enden oder aus ihr herausragen.

Das Material der kapillaraktiven Deckschicht ist bevorzugt aus der Gruppe bestehend aus einem kapillar aktiven textilen Flächengebilde, beispielsweise einem Gewebe, Vlies oder Gewirk, einem kapillar aktiven offenporigen Schaum, wobei dieser als fertige Lage aufgebracht ist oder direkt auf der Oberfläche aufgeschäumt wird und/oder einer kapillar aktiven porösen Schicht, die beispielsweise durch Sprüh-/Tauch-/Düsen- oder Rakelbeschichtung aufgebracht wird, ausgewählt.

Ein weitere Ausführungsform der Erfindung sieht vor, dass zwischen dem wärmedämmenden, nicht kapillaraktiven Kern und der kapillaraktiven Deckschicht eine als Dampfsperre oder Dampfbremse wirkende Schicht aufweist, durch die die kapillaraktiven Dochte geführt werden. Geeignete Materialen für eine Dampfsperre oder eine Dampfbremse sind beispielweise Glas, Polyethylen oder Metalle, wie Aluminium.

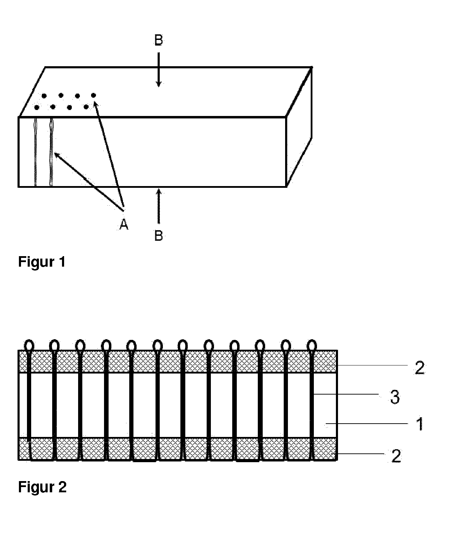

Figur 1 zeigt das regelmäßige Durchsticken von kapillaraktiven Dochten in eine Wärmedämmplatte, die umseitig mit einem kapillaraktiven Stoff kaschiert ist. Der erhaltene erfindungsgemäße Wärmedämmformkörper weist eine erhöhte Zugfestigkeit und eine niedrige Wärmeleitfähigkeit auf. A= regelmäßiges Durchsticken von kapillaraktiven Dochten; B = umseitige Kaschierung mit kapillaraktivem Stoff, beispielsweise Gewebe oder Kombination mit Mörtel.

Figur 2 zeigt einen durch Tufting hergestellten Wärmedämmformkörper, dessen wärmedämmender, nicht kapillaraktiver Kern eine Wärmedämmplatte (1) ist, die hydrophobierte Kieselsäure und ein IR-Trübungsmittel enthält, dessen kapillaraktive Deckschicht aus Mineralwolle (2) besteht und dessen kapillaraktiven Dochte Glasfasern (3) umfassen. Die mechanische Endfestigkeit kann durch Verkleben an der Wand, indem die Ösen flächig miteinander verbunden oder zumindest lokal verklebt werden, erhöht werden.

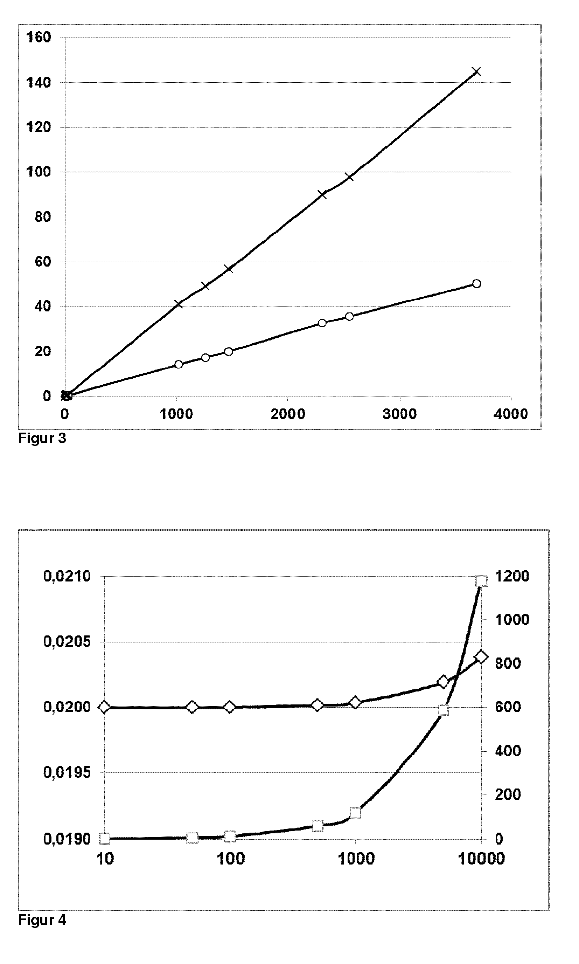

Figur 3 zeigt die Wirkung der kapillaraktiven Dochte. Hierzu wird ein Wärmedämmformkörper in eine mit Wasser gefüllte Wanne gegeben. Der Wärmedämmformkörper schwimmt mit einem kleinen Spalt zum Rand der Wanne um die freie Konvektion/Verdunstung zu minimieren und um immer einen guten Kontakt zum Wasser zu gewährleisten. Die Anordnung steht auf einer Waage. Bei definierten Strömungsverhältnissen in einem Abzug bei 22°C wird gleichzeitig die Massenabnahme mit der Zeit gemessen. Der Wärmedämmformkörper ist

a) eine hydrophobe, diffusionsoffene Platte (200x200x35mm$^3$), deren Hauptbestandteil eine hydrophobierte, pyrogene Kieselsäure (CALOSTAT®, Evonik Industries) ist. Der Wasserdampf muß durch die Platte diffundieren bevor es zur freien Konvektion oberhalb kommt. In Figur 3 sind die Werte mit o markiert.

b) eine CALOSTAT®-Platte mit 3 kapillaraktiven Dochten und mit einem kapillaraktiven Deckvlies (170x200mm$^2$). Jeder Docht besteht aus ca. 7000 Einzelfäden aus Glas mit einem Durchmesser von ca. 10$\mu$m. In Figur 3 sind die Werte mit x markiert. Hier wird das Wasser durch die Dochte in die Deckschicht befördert, wo Verdunstung mit freier oder erzwungener Konvektion aufgrund des Abzuges vorliegt. Die Verdunstungsrate ist mit Dochten ca. dreimal so groß wie ohne kapillaraktiven Dochte. Die 3 kapillaraktiven Dochte reichen bereits vollkommen aus, um das Deckvlies dauerhaft zu benetzen. In Figur 3 ist die verdunstete Wassermenge in Gramm gegen die Zeit in Minuten aufgetragen.

Figur 4 zeigt eine berechnete Wärmeleitfähigkeit und Zugfestigkeit eines gesteppten Wärmedämmformkörpers umfassend eine nicht kapillaraktiven, diffusionsoffene Wärmedämmplatte, CALOSTAT®, und eine kapillaraktive Deckschicht und kapillaraktive Dochte. Bei der Zugfestigkeit wird die Annahme gemacht, dass alle kapillaraktiven Dochte bis zur Zerreißgrenze halten und es keine Fehlstellen gibt, die kapillaraktiven Dochte aus Glasfasern (Zugfestigkeit 3000MPa) sind und die Zugfestigkeit von CALOSTAT® 0 kPa ist. Weiterhin werden die kapillaraktiven Deckschichten vereinfacht mit der Dicke d=0 angenommen. In Figur 4 steht die x-Achse für die Anzahl Fäden (Durchmesser des Einzelfadens = 10 $\mu$m) pro Docht, linke y-Achse für Lambda in W/(mK) (Markierung in Figur 4: Raute): , rechte y-Achse für die Zugfestigkeit in kPa (Markierung in Figur 4: Quadrat).

Ausgehend von 20 mW/(mK) für den nicht kapillaraktiven, wärmedämmenden Kern erhöht sich die Wärmeleitfähigkeit mit zunehmender Anzahl an kapillaraktiven Dochten. Die kapillaraktiven Dochte werden hierbei in einem Raster von 4x5cm$^2$ gesteppt. Variiert wird die Anzahl der einzelnen Fäden pro Docht. Erst bei 10000 Fäden pro Docht steigt die Wärmeleitfähigkeit um knapp 0,5 mW/(mK). Dies entspricht einem effektiven Dochtquerschnitt von 0,8 mm. Das gewählte Raster hat 500 Dochte pro Quadratmeter zur Folge. Während die Wärmedämmung also nur gering abnimmt, nimmt die Zugfestigkeit deutlich zu.

Eine reale Messung für einen gesteppten Wärmedämmformkörper aus einer CALOSTAT®-Platte mit einer Dicke von 30 mm, kapillaraktiven Dochten, wie in der Beschreibung zu Figur 3 angegeben, und mit 12 mm Mineralwolle, Akustic EP3 ISOVER St. GOBAIN, als beidseitige Deckschicht ergibt eine effektive Wärmeleitfähigkeit von 0,024 W/(mK) Die Messung wurde mit einem Plattengerät bei 10°C Mitteltemperatur und einem Anpressdruck von 2000 Pa durchgeführt. Der rechnerische Wert liegt bei 0,025 W/(mK). Dies zeigt die gute Übereinstimmung von Theorie und Praxis.

**Patentansprüche**

1. Wärmedämmformkörper, der einen Lochungen aufweisenden, wärmedämmenden Kern umfasst und diese Lochungen mit einem kapillaraktiven Material befüllt sind,
   ***dadurch gekennzeichnet, dass***
   der wärmedämmende Kern nicht kapillaraktiv ist und das kapillaraktive Material in den Lochungen kapillaraktive Dochte umfasst.

2. Wärmedämmformkörper nach Anspruch 1,
   **dadurch gekennzeichnet, dass**
   die Lochungen einen Durchmesser von 100 bis 6000 μm aufweisen.

3. Wärmedämmformkörper nach den Ansprüchen 1 oder 2,
   **dadurch gekennzeichnet, dass**
   die kapillaraktiven Dochte eine Flächendichte von 10 bis 10000 Stück/m$^2$ aufweisen.

4. Wärmedämmformkörper nach den Ansprüchen 1 bis 3,
   **dadurch gekennzeichnet, dass**
   die Querschnittsfläche der kapillaraktiven Dochte von 0,001 bis 1 mm$^2$ beträgt.

5. Wärmedämmformkörper nach den Ansprüchen 1 bis 4,
   **dadurch gekennzeichnet, dass**
   die kapillaraktiven Dochte Garne Zwirne, Fäden, texturierter Spinnfaden, Filamente und Kordeln umfassen.

6. Wärmedämmformkörper nach den Ansprüchen 1 bis 5,
   **dadurch gekennzeichnet, dass**
   das Material der kapillaraktiven Dochte ausgewählt ist aus der Gruppe bestehend aus Basalt, Silika, E-Glas, C-Glas und Glas.

7. Wärmedämmformkörper nach den Ansprüchen 1 bis 6,
   **dadurch gekennzeichnet, dass**
   die kapillaraktiven Dochte aus dem Wärmedämmformkörper herausragen oder bündig mit der Oberfläche des Wärmedämmformkörpers enden.

8. Wärmedämmformkörper nach den Ansprüchen 1 bis 7,
   **dadurch gekennzeichnet, dass**
   der wärmedämmende, nicht kapillaraktive Kern eine Wärmedämmplatte, eine Wärmedämmmatte oder eine Wärmedämmschüttung ist.

9. Wärmedämmformkörper nach den Ansprüchen 1 bis 8,
   **dadurch gekennzeichnet,**
   **dass** die die Dicke des wärmedämmenden, nicht kapillaraktiven Kerns 3 bis 150 mm beträgt.

10. Wärmedämmformkörper nach den Ansprüchen 1 bis 9,
    **dadurch gekennzeichnet, dass**
    der wärmedämmende, nicht kapillaraktive Kern eine Wärmeleitfähigkeit von weniger als 0,025 W/(mK) aufweist.

11. Wärmedämmformkörper nach den Ansprüchen 1 bis 10 ,
    **dadurch gekennzeichnet, dass**
    der wärmedämmende, nicht kapillaraktive Kern hydrophobe, pyrogene Kieselsäure enthält.

12. Wärmedämmformkörper nach den Ansprüchen 1 bis 11,
    **dadurch gekennzeichnet, dass**
    er wenigstens eine ein- oder beidseitig des wärmedämmenden, nicht kapillaraktiven Kerns angebrachte kapillaraktive Deckschicht umfasst, wobei die kapillaraktiven Dochte in der kapillaraktiven Deckschicht enden oder aus ihr herausragen.

13. Wärmedämmformkörper nach Anspruch 12,
    **dadurch gekennzeichnet, dass**
    das Material der kapillaraktiven Deckschicht ausgewählt ist aus der Gruppe bestehend aus einem kapillar aktiven textilen Flächengebilde, einem kapillar aktiven offenporigen Schaum und/oder einer kapillar aktiven porösen Schicht.

**14.** Wärmedämmformkörper nach den Ansprüchen 12 oder 13,
**dadurch gekennzeichnet, dass**
er zwischen dem wärmedämmenden, nicht kapillaraktiven Kern und der kapillaraktiven Deckschicht eine als Dampfsperre oder Dampfbremse wirkende Schicht aufweist, durch die die kapillaraktiven Dochte geführt werden.

**Figur 1**

**Figur 2**

Figur 3

Figur 4

Europäisches
Patentamt

European
Patent Office

Office européen
des brevets

# EUROPÄISCHER RECHERCHENBERICHT

Nummer der Anmeldung

EP 15 15 1456

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | WO 2009/026910 A1 (REMMERS BAUSTOFFTECHNIK GMBH [DE]; ENGEL JENS [DE]; LOHMANN THOMAS [DE]) 5. März 2009 (2009-03-05) * Seite 6, Zeile 6 - Seite 10, Zeile 7; Abbildungen 1-3 *  ----- | 1-14 | INV. E04B1/76 |
| A | EP 2 765 251 A1 (DAW SE [DE]) 13. August 2014 (2014-08-13) * Absatz [0015] - Absatz [0096]; Abbildungen 1-9 *  ----- | 1-14 | |

RECHERCHIERTE
SACHGEBIETE (IPC)

E04B

Der vorliegende Recherchenbericht wurde für alle Patentansprüche erstellt

| Recherchenort | Abschlußdatum der Recherche | Prüfer |
|---|---|---|
| Den Haag | 3. Juli 2015 | Couprie, Brice |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

..........................................................................

& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 15 15 1456

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-07-2015

| Im Recherchenbericht angeführtes Patentdokument | Datum der Veröffentlichung | Mitglied(er) der Patentfamilie | Datum der Veröffentlichung |
|---|---|---|---|
| WO 2009026910 A1 | 05-03-2009 | DE 102007040938 A1<br>DK 2183099 T3<br>EP 2183099 A1<br>EP 2666625 A1<br>WO 2009026910 A1 | 18-12-2008<br>16-12-2013<br>12-05-2010<br>27-11-2013<br>05-03-2009 |
| EP 2765251 A1 | 13-08-2014 | KEINE | |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202005005231
- WO 2009026910 A
- WO 2014044709 A
- WO 2013013714 A